# EUROPEAN PATENT APPLICATION

(11) **EP 4 768 245 A1**
(43) Date of publication of application: **01.07.2026**
(21) Application number: 25223858.9
(22) Date of filing: 26.07.2022
(51) Int. Cl.: B32B 29/06

(54) **METHOD FOR MANUFACTURING A PRODUCT COMPRISING A DECORATIVE SURFACE LAYER**

(30) Priority: 05.08.2021 EP 21189869
(62) Divisional of application: 22744842.0
(71) Applicant: Unilin, BV, 8710 Wielsbeke (BE)
(72) Inventor: CLEMENT, Benjamin, 8790 Waregem (BE)
(74) Representative: Unilin Technologies

(57) **Abstract**

A method for manufacturing a product comprising a three dimensional surface layer, said method at least comprising the following steps: applying of a water based resin on an underlying surface of the product, wherein said water based resin is at least in part thermocurable; providing a UV-curable liquid onto at least one portion of said water based resin, when said water based resin is liquid or partially cured; curing the water based resin at least by heating; optional UV curing of said UV-curable liquid; optional removing of said UV-curable liquid; and optional pressing of the surface layer and underlaying surface by a pressing device.

## Description

The present invention pertains to the technical field of methods for manufacturing products comprising decorative surface layers, more particular decorative surface layers for panels used in flooring, walls, celling, furniture and the like. Further, the present invention relates to a method for producing a panel, said panel comprising a decorative surface layer and a substrate material.

Decorative surface layers on panels which comprise a relief are known, for example, from WO 01/96689, WO 02/058924 and WO 2006/066776. Such relief comprising embossments is provided in the decorative surface layer, usually by using a press plate provided with a relief and pressing the decorative surface layer and an underlying layer together. In some circumstances, it is desired that the embossments are deep. In some circumstances, especially when such deep embossments are provided, various pressing defects visible in the decorative surface layer may arise. Thus, such methods may not be suitable for decorative surface layers featuring deeply embossed reliefs. Furthermore, the obtained relief may be lacking a design flexibility, since the occurrence of embossments is predetermined by the press plate.

More advanced methods for obtaining more versatile surface appearances are known from WO 2020/039361 and WO 2018/069874. WO'874 concerns a method for producing a three dimensional embossed surface on a substrate, which method comprises applying of a non-polymerized photocurable resin onto the surface of the substrate and applying a water-based embossing liquid, typically by means of the inkjet printing, and subsequent polymerizing of a photocurable resin. While the method of WO'874 may offer either positive or negative embossing of the surface, as the removal of the embossing liquid is optional, the method was found to be unsuitable for obtaining of the deep surface embossments. Moreover, the requirement of photocurable agents in the resin together with the UV-curing of large surfaces may lead to a higher cost of such method and the products obtainable thereby. WO'361 aims for embossing in registration using the digital printing of the liquid onto a resin which is not yet or only partially solidified. The resin and the liquid are then solidified/polymerized in different moments. WO'361 is also not suited for surfaces aiming a larger embossment depth. Furthermore, the appearance of disturbances in the resin thickness, i.e. the appearance of "waves" around the droplets of the applied embossing liquid was particularly impairing the appearance of such surfaces obtainable by both WO'874 and WO'361.

US 2020/0346246 relates to a method for a producing a structure on a surface of a workpiece, the method comprising applying a liquid base layer on said surface, and spraying of at least one droplet on not yet congealed layer, wherein said at least one droplet at least partially and preferably completely penetrates into said base layer. Subsequently, said at least one droplet is removed from said surface. The base layer and the droplet are preferably of different materials and are cured by UV radiation or cooling, in a way that the base layer cures harder than the droplet. Though US'246 also aims to obtaining the more versatile embossments and thus improved surface layers of workpieces such as panels, the method of US'246 is still not suitable for achieving deep embossments of the decorative surface layers. The application of droplets on not yet congealed liquid base layer may cause unwanted "wavy" structures in the base layer and impair the decorative surface layer appearance.

Furthermore, versatile decors obtainable by the methods of the prior art feature typically UV curable resins, which may be characterized by an insufficient mechanical resistance.

The present invention is in the first place aiming at an alternative method for manufacturing products, for example comprising three dimensional surface layers and/or surface layers with a varying gloss degree. In accordance with preferred embodiments a solution is offered for obtaining a more versatile surface layers for products. Furthermore, the present invention also aims to a method for producing a product comprising a surface layer of an improved mechanical properties.

In accordance with a first independent aspect, the present invention relates to a method for manufacturing a product comprising a three dimensional surface layer, said method at least comprising the following steps:
- applying a resin, preferably a water based resin, on an underlying surface of the product; wherein said resin is at least in part thermocurable;
- providing a photocurable liquid onto at least one portion of resin, when said resin is liquid or partially cured;
- preferably said photocurable liquid is UV curable;
- at least partially curing the resin at least by heating;
- optional curing of said photocurable liquid via photo-radiation;
- optional removing of said photocurable liquid.

In a prefferred embodiment the steps are conducted in the indicated order, and that in this case the liquid is preferably applied on the resin when the the latter is still in a liquid or pasty state.

The method of the present invention is particularly suitable for obtaining more versatile three dimensional surfaces of the products, which surfaces comprise reliefs and/or embossments, preferably obtainable by digital printing of said liquid onto the resin. In the method of the invention, the resin applied over the underlaying layer of the product is curable by means of a thermal energy i.e. heating, which is a well controllable process and can be easily combined with other processing steps, such as pressing of the panels. On the other hand, the liquid provided thereon is a photo-curable liquid, liquid, which may or may not be independently cured from said resin. By provision of the resin and the liquid which may be cured in a different manner, the method of the invention is better controllable and can allow for fine adjusting of a degree of cure of the resin and/or the liquid. Moreover, the different curing properties may allow for better compatibility with different processing steps. For example, the step such as heat pressing of the surface layer onto the underlying layer of the product, may lead to at least partial curing of the resin and/or the liquid.

As mentioned above in the most preferred embodiment, the at least in part thermocurable resin may be a water based resin. The step of providing of the water based resin which is cured by the heating allows for a surface layer characterized by an improved mechanical properties, such as, for example, scratch resistance. The curing by heating is in principle more efficient and uniform, and particularly suitable for thick surface layers, which may reach even 1000 µm without impairment of the mechanical properties, such as scratch resistance. This is particularly advantageous when compared to three dimensional surfaces known from for example WO 2020/039361 or US 2020/0346246, wherein the top layer comprises an UV curable resin, which is characterized by weaker mechanical properties than the water based resin of the invention.

In a particularly preferred embodiment, the method of the invention comprises providing of the photocurable liquid, wherein said liquid at least partial penetrates in the resin. Said at least partial penetration of the photocurable liquid may be particularly desired when aiming to achieve deep embossments on the surface layer of the product. The different curing properties may simplify partial or complete removal of the photocurable liquid, wherein during removal said photocurable liquid can be uncured, partially cured or fully cured. Zones of partial penetration of the liquid into the resin may be cured by thermal energy and/or photo-radiation, which allows to perform a more flexible process and achieve different curing degrees of the resin, the liquid and optionally mixtures of the resin and the liquid obtainable in the zones of said at least partial penetration.

In a particularly preferred embodiment, the photocurable liquid can be at least partially miscible with the resin used in the method of the invention. Said partial miscibility may be particularly favorable when aiming for deep embossments in a three dimensional surface layer. In a such manner, a more realistic and enhanced natural look of the surface layer may be achieved. Indeed, thanks to said partial miscibility the photocurable liquid can penetrate deeper in the resin without creating the unwanted "wavy" effect. Moreover, the partial miscibility of the resin and a liquid may allow better control of the curing process, as these mixtures may be cured by thermal radiation, photo radiation or both.

In an alternative embodiment, the photocurable liquid may be immiscible with the resin used in the method according to the first aspect of the invention. The photocurable liquid which is immiscible with the resin may be particularly advantageous in methods aiming to produce sharp contours of embossments and recesses on the decorative surface layer, as well as to pronounce the sharp contrasts in a decorative layer. Immiscibility of the liquid in the resin may further simplify the subsequent removal of the liquid.

In an alternative embodiment, the method according to the first aspect of the invention comprises a step of at least partially curing the resin at least by heating, before said step of applying the photocurable resin. The method further comprises the step of fully curing the resin after the liquid has been provided, for example after said optional step of photocuring the photocurable liquid. In this particular embodiment, by at least partial thermal curing of the resin, the resin and the liquid will interact less and will be less miscible. The obtainable surface layer would be of a better defined relief. Partially curing of the resin before application of the liquid may further provide for an improved control of the penetration depth of the liquid in the resin itself. For example, by controlling the degree of partial curing of the resin it may be possible to control the resistance that the resin itself exert against the penetration of the liquid so that it may be possible to control the penetration depth.

In a preferred embodiment, the step of providing the photocurable liquid takes place by a digital printing technique, preferably inkjet printing. Thereto, preferably a digital print head or a digital controlled spray gun or nozzle is used. Digital printing, and inkjet, in particular is a preferred technique since may provide application of the liquid according to any kind of desired pattern and may provide for an increased control of the quantity of liquid to be discharged. Moreover, through inkjet printing, it is possible to discharge the liquid in small droplets with a relatively high resolution so to improve the definition of the embossment. Thanks to the digital technique the obtained tridimensional structure layer may be in register with an underlaying decorative pattern.

In one embodiment, the curing of the photocurable liquid, is done in several steps, preferably in two steps, wherein the first step of photocuring the liquid yields only partially cured liquid.

It should be understood by a skilled person that by "photocuring" means any curing activity in the presence of the light, i.e. electromagnetic radiation in both visible and near-visible spectrum of light. In the preferred embodiment, said radiation is a UV radiation. In alternative embodiments the radiation may be a LED radiation or a visible radiation.

In a preferred embodiment, said photocurable liquid comprises a polymer material, preferably a crosslinked or crosslinkable resin, preferably acrylic polyester resin, for example unsatureated polyester. In a further preferred embodiment, the liquid comprises an acrylate and/or methacrylate. In another preferred embodiment, the photocurable liquid comprises vinyl monomers. When the photocurable liquid is acrylic or unsaturated polyester resin, UV curing may be particularly advantageous since it provides for more uniform curing.

In the most preferred embodiment, the liquid further comprises a photoinitiator. The photoinitiator suitable to be used in the liquid for the method according to the second aspect of the invention can be preferably a type 1 or 2 photoinitiator, preferably acylphosphine oxide, benzile ketale, benzoin derivate, alfa hydroxyalkylphenone, alfa amine acetophenone, phenylglyoxylate, for example TPO-L. The photo initiator is chosen so to control the curing of the liquid and to allow the fast and economic curing of the liquid, preferably separately from the resin.

The liquid may further comprise additional agents, such as surface tension modifiers, slip agents, wetting agents and the like.

The photocuring of the liquid has been found to be particularly advantageous when the liquid is applied by means of a digital printing techniques. In such embodiments, the photo- preferably the UV- curing is relatively easy and efficient process, as the surfaces and the depths of layers to be cured remain limited.

In an alternative embodiment, said photocurable liquid may be at least in part thermocurable. This may be advantageous in methods where the simultaneous thermal curing of the resin and the of the liquid is desired.

The water based resin may compris at least 30 wt.% of water with respect to the total weight of said water based resin. Preferably, the water based resin comprises at most 50 wt.% of water, even more preferably at most 40 wt.% of water with respect to the total weight of said water based resin. Said water content is preferable to allow the efficient embossing with the photocurable liquid on one hand, and relatively fast and efficient at least partial curing by the heat on another hand. Furthermore, the water content of at least 30 wt.% may be particularly suitable for at least partial miscibility of the photocurable liquid and the resin in the embodiments where such at least partial miscibility is preferred. In a preferred embodiment, the content of water in the resin decreases during the curing by thermal radiation. The resin of the invention, after the thermal curing step has preferably at least 75 wt.% of solid content, more preferably at least 90 wt.% of solid content, most preferably at least 95 wt.% of solid content.

Said water based resin in uncured state, for example in the step of applying said water based resin onto the underlying surface, may comprise at least about 25 wt.%, preferably at least about 40 wt.%, and at most about 75 wt.%, preferably at most about 50 wt.% of solid matter with respect to weight of said water based resin. Such solid content is found to be particularly important to minimize spontaneous evaporation of the solvent that could cause defect in the embossable liquid and at the same time improving application of the resin. Moreover, the choice of the water, as the substantially predominant solvent in a water based resin, is particularly advantageous, as water is less prone to spontaneous evaporation from a resin in a uncured state, when compared to other organic solvents. This was particularly advantageous for a targeted and controlled curing of the water based resin using the heat and/or thermal radiation. Moreover, the provision of the water based resin does not bring up health and safety concerns and has less damaging effect onto the processing equipment during the thermal energy curing.

In a particularly preferred embodiment, said water based resin substantially comprises only water as a solvent. In an alternative embodiment, the water based resin may comprise organic solvents, which may be used in a content of at most 20 wt.%, calculated based on the weight of the uncured resin, preferably at most 10 wt.% calculated based on the weight of the uncured resin, i.e. the resin used in the step of applying said water based resin onto the underlying surface.

In a preferred embodiment, the resin suitable for the method according the first aspect of the invention comprises melamine-formaldehyde, ureaformaldehyde, polyurethane, acrylic, unsaturated polyester, phenolic, epoxy resin or any combination thereof. In a particularly preferred embodiment, said resin comprises at least acrylate resin and/or unsaturated polyester resin.

In a particularly preferred embodiment, the resin used in the method according to the first aspect of the invention is melamine-formaldehyde resin.

In another particularly preferred embodiment, the resin used in the method according to the first aspect of the invention is acrylate resin dispersion or emulsion, preferably in water.

In another particularly preferred embodiment, the resin used in the method according to the first aspect of the invention is polyurethane resin dispersion or emulsion, preferably in water.

In an alternative embodiment, the resin may comprise: epoxy acrylates, urethane acrylates, polyester acrylates, polyether acrylates, amino acrylates, silicone acrylates, polyisoprene acrylates, polybutadiene acrylates and acrylate monomers . The term acrylates means both acrylate and methacrylate resins. In another embodiment, the resin may comprise vinyl resins. The monomers of said vinyl resin may include the following monomers: N-vinyl caprolactam (NVC) , acryloyl morpholine (ACMO) , diethylene glycol divinyl ether (DVE-2), triethylene glycol divinyl ether (DVE-3) and mixtures thereof. It should be understood by a skilled person that any resin suitable for thermal and/or heat curing may be used without departing from the scope of the present invention. Here we are talking about a system which is UV-curable so a dualcure system, first solvent evaporation and afterwards curing with a photo or thermoinitiator.

In a preferred embodiment according to the first aspect of the invention, the resin further comprises additives such as: matting agents, for example silica, abrasion resistant particles, for example aluminum oxide, rheology modifiers, thermoinitiators, and the like. In a preferred embodiment, said abrasion resistant particles preferably are of an average particle size of 20 to 150 µm,

In a preferred embodiment of the invention, said curing of the resin at least by heating is curing in absence of a photoradiation. More particularly, the curing of the resin takes place in absence of a light source, irrespective of the wave length of the light produced by said light source.

In a further preferred embodiment, the curing of the resin is performed in a thermal drying device, such as for example a hot-air or (N)IR oven. In this embodiment, the resin layer of the product is preferably applied onto the substrate material, said substrate material being thermoresistant. Some non-limiting examples of said preferred substrate materials are wood or cellulose based materials, such as HDF, MDF and /or a particle board, mineral based substrate materials, such as MgO, gypsum and cementfibre board. In an alternative embodiment, the substrate material of the product may be thermoplastic material, said thermoplastic material being resistant to the temperatures in the thermal drying device.

In a preferred embodiment of the invention, the step of thermally curing the resin is conducted at a temperature between 60 °C and 200 °C.

In a particularly preferred embodiment, said curing of the resin is done exclusively by heating. The mechanical properties of such thermally cured surface layers were found to be better than the properties of the UV curable surface layers known in the prior art. Moreover, the thermal curing also allows more uniform curing to be obtained in the thickness of the resin, even in the portion of the resin that are closer to the substrate.

In a further preferred embodiment, the thermal curing of the resin may be initiated by means of one or more thermoinintiators that are mixed homogenously or essentially homogenously with the resin. The use of thermoinintiators is found to be particularly suitable when a resin layer of thickness of between 50 and 1000 µm is desired, more preferably if a resin layer of a thicknes between 60 and 300 µm is desired, most preferably is a resin layer of a thickness of about 100 and 300 µm is desired.. The use of thermoinitiators may allow for more uniform and efficient curing process, which takes place throughout the thickness of a layer of the resin almost simultaneously and/or to the same degree. A thermoinitiator can more generally be defined as a thermally unstable molecule that breaks down or disintegrates on exposure to heat, at least in one or more radicals. The radicals produced then play the same role as the radicals that are produced in known photoinitiators in the UV curing of the resin. Some non-limiting examples of thermoinitiators are organic peroxides, preferably such as benzoyl peroxide, methylbenzoyl peroxide, TPBIN (tertiary butylperoxy-3,5,5 trimethyl hexanoate), lauryl peroxide, 2-butanone peroxide, persulfate, peroxydiphosphate, persulfate, ketone peroxide, diacyl peroxide, peroxyketal, hydroperoxide, peroxydicarbonate, peroxymonocarbonate, preferably tert-butyl peroxy 3,5,5 trimethyl hexanoate (TPBIN).

In addition to peroxides, as an alternative, one can also use azo-polymerization initiators, such as azonitrile, azoester, hyponitrites and/or azoamide. As a specific example, one can use azobisisobutyronitrile (AIBN), 2-methylbutyronitrile (AMBN), azovaleronitrile (AVN). Another alternative is the use of cesium ions. Of course, two or more of the above-mentioned thermoinitiators can be combined, without departing from the scope of the present invention.

In addition also isocyanates, blocked isocyanates, carbodiimides, aziridines, or acid curing agents can be used to cure and crosslink the resin

In another preferred embodiment, said resin in addition to being at least in part thermocurable is also at least in part photocurable. In this particular embodiment, the resins may be divided in two types, on the basis of the curing mechanism: 1) radical, typically acrylate resins and vinyl monomers 2) cationic resins, such as epoxy, polyols and monomers such as oxetans and vinyl ethers.

In addition to the monomers, such resins may further comprise one or more photocurable resins, photoinitiators, fillers, such as, for example, aluminum oxide, to increase the abrasion resistance thereof, talc to modify the rheology thereof, silica to reduce the brilliance thereof, calcium carbonate and other additives, for example, leveling agents, wetting agents, slip agents, rheology modifiers, commonly used to protect floor and furniture surfaces from wear, scratches and abrasions. The resin may further preferably contain silicones which are capable of increasing the depth of the embossing. Typically, silicones are added from 0.01% to 20%, from 0.01% to 10%, from 0.01% to 2%. The various usable products include silicones, silicone polyethers, silicone acrylates, silicone polyether acrylates.

In another particularly preferred embodiment, said curing of the resin at least by heating comprises a first curing step by means of heating, wherein the resin is cured to a degree of cure of at least 0.5, and preferably a second curing step whether or not by means of heating wherein a total cure is obtained, or at least a degree of cure of more than 0.9. A term "degree of cure" as used herein, is a numerical representation of how far the chemical curing reaction (crosslinking process) of a polymer resin has advanced. It can be considered as a processing state variable used to describe the current polymer material state based on its process cure history. The degree of cure is defined as a number between 0 and 1 (or 0% and 100%), where the latter is a fully cured resin. As the curing reaction and crosslink network formation progresses, the representative degree of cure value likewise increases. It should be recognized by the person skilled in the art that the degree of cure does not have to reach 100% (or a value of 1) to for the resin to be solid and/or considered as "fully cured". In practice, a resin is considered fully cured at a degree of cure value of around 0.9 or higher. If the resin is of the degree of cure value higher than 0, and less than 0.8, it is considered to be a partially cured resin. In practice, at the degree of cure value of about 0.5 to 0.6, the resin reaches a gelled state, wherein the resin flow stops and the resin behaves like a semi-solid gel material.

In a further preferred embodiment according to the first aspect of the invention, said degree of cure of at least 0.8 for the resin is obtained by the first curing step by means of the heat radiation, preferably heating. The possibility to at least partially cure the resin leads to a more economic method for manufacturing the three-dimensional surface layers, as the eventual subsequent curing, if needed, may be combined with another processing steps.

In a further preferred embodiment, said second curing step, when available, is performed by means of photoradiation, preferably by means of UV radiation. The possibility to additionally cure the resin of the invention was found to be particularly advantageous in the processes which do not require an additional press step in the postforming of a product.

The method according to the first aspect of the invention may comprise the step of providing said product with a decorative layer. Preferably said decorative layer interposed between said surface layer and said substrate material. Preferably the decorative layer comprises a decorative pattern, for example imitating a wood, stone, cement pattern or any kind of design. Said decorative pattern can be printed, most preferably printed using a digital printing technique, in particular inkjet printing. It is noted that in a preferred embodiment of the invention the photocurable liquid can be applied according to a pattern that is in register with said decorative pattern so that the final tridimensional surface shows the embossment in register feature. In case the photocurable liquid is printed it may also be preferable that it is printed with a resolution that is substantially the same of the resolution used to print the decorative pattern.

Said decorative layer can be preferably provided according to two possibilities.

In the first possibility, the decorative pattern can be printed directly onto the substrate. With the expression "printed directly" it is meant that the printing operation is performed on the substrate instead of being performed on a separate material, like a sheet, that is afterward provided on the substrate. Therefore, the expression "printed directly" doesn't exclude that intermediate layers, like primers or ink receiver layers, are interposed between the surface of the substrate and the decorative layer.

In case the decorative pattern is directly printed on the substrate it is preferable that the said printing operation is performed in line with the steps of providing the resin and/or of providing the photocurable liquid. More preferably, the decorative pattern may be printed with an inkjet printer that is disposed upstream to a device for providing the resin.

In the second possibility it is possible that the decorative layer is in form a separate layer, for example a décor sheet, that is attached on top of the substrate for example by pressing, gluing, thermal lamination or lamination. In a preferred embodiment said decorative layer comprises a décor sheet or foil, for example a decorative thermoplastic foil or a décor paper. Prior to printing, the sheet can be opaque and/or colored so as to form a base color for the decor, and so as to hide the appearance of the underlaying layers of the substrate material, from view.

In case the decorative layer comprises a paper sheet, it preferably includes an impregnating resin. Said impregnating resin is preferably thermosetting resin, more preferably a resin used for the surface layer. In a preferred embodiment, the thermosetting resin of the decorative layer comprises at least a melamine resin. In another preferred embodiment, said thermosetting resin of the decorative layer comprises a crosslinked or cross linkable acrylic or unsaturated polyester resin. It has been found that a at least partial replacement of melamine resin in the top layer material would be possible by using another thermosetting resin, such as crosslinked or cross linkable acrylic or unsaturated polyester resin. According to a preferred embodiment, the resin of the decorative layer at least semi-cured.

Although digital printing represent the preferred solution for providing the decorative pattern, in some embodiments it may be possible that said decorative layer comprising the print may be obtained via an analogue printing technique, preferably gravure printing.

It is noted, that especially in case the product comprises a decorative layer, the resin and/or the liquid can be transparent or translucent, in particular after its curing step. The transparency of the resin and/or of the liquid is preferably refereed to the visible radiation so that the resin and/or the liquid may be visibly transparent and the decorative layer is visible through the resin and/or the liquid itself.

In a particularly preferred embodiment of the method according to the first aspect of the invention, said method further may further pressing of the surface layer to the underlaying material or a substrate material in a press treatment step, preferably a hot press treatment step. Said pressing step is preferably performed in a HPL and/or DPL and/or CPL or multidaylight press.

In a further preferred embodiment, the press step comprises an additional embossing of the surface layer, in particular an "analog" mechanical embossing. Such additional embossing of the surface layer may be performed by a pressplate, a press belt, a release paper, and the like.

The method may further comprise the step of removing the liquid or a mixture of the liquid and of the resin. The step of removing the liquid or said mixture can be performed either before or after the curing of said photocurable liquid or of said mixture. In any case the removal step is preferably conducted after partial, more preferably fully, curing of the resin so that said resin can resist to the removing action and the removing action is selectively effective only in those areas where the liquid has been applied. By removing the liquid or the mixture excavation are formed in the surface of the resin layer at the location where the liquid was provided so that the tridimensional structure is obtained. Said removal step may be performed via chemical or mechanical means. For example, the removal step may comprise the step rinsing the portions to be removed with a solvent able to dissolve the liquid and/or the mixture. In the preferred embodiment, the removal step is performed via mechanical means like brushing, suction or blowing or airblade. In case the liquid and or the mixture of the liquid and of the resin is partially or fully cured when the removal step is performed, it is preferable that the liquid and/or the mixture has a lower hardness, or a higher solubility, compared to the resin so that the removal action is effective only toward the liquid and/or the mixture thereby forming the structure.

Instead or in addition to the forming of a tridimensional structure on top of the surface, the invention may provides for the forming of a surface having different gloss degrees. Thereto, the present invention, according to its second aspect, concerns a method for manufacturing a product comprising a surface layer with a varying gloss degree, said method at least comprising the following steps:
- applying of a resin on an underlying layer of the product;
- providing a liquid onto at least one portion of said resin, when said resin is liquid or partially cured;
- optional curing of said liquid;
- curing of the resin ;
- optional curing of said liquid;
- wherein said step of curing of the resin, said resin becomes of a gloss degree I, and in that by said step of curing of said liquid or a mixture of said liquid with the resin becomes of a gloss degree II, whereby said gloss degree II is substantially different than gloss degree I.

In the preferred embodiment of the second aspect, the steps are performed in the indicated order. In this case, the liquid is preferably provided on the resin while the latter is in a liquid or pasty state.

In an alternative embodiment, the method according to the second aspect may comprise the step of partial curing the resin before the step of applying said liquid. The method may further comprise a step of fully curing the resin after the step of applying the liquid.

The method according to thr second aspect of the invention enables provision of at least two zones of gloss degrees I and II corresponding to the resin and the liquid or the mixture of said liquid with said resin, respectively, on the surface layer of the product. Such surface layer allows creating the impression of a tridimensional structure on the surface of the product, and creates a more natural look of a surface which would be hard to imitate using some other method.

Preferably, said resin and said liquid feature at least two gloss degrees, which can clearly be distinguished by the user, i.e. are visible to the naked eye. More particularly, it is preferred that, the aforementioned zones corresponding to the resin and the liquid are cured in such a way to allow that certain zones clearly manifest themselves as matte zones, whereas other zones manifest themselves as non-matte or glossy zones.

The most matte zones on the floor panel preferably have a gloss degree of 10 or even better less than 10, whereas the less matte or glossy zones have a gloss degree of more than 10, and even better more than 20, all as measured according to DIN 67530. Irrespective of the applied absolute gloss degrees, the difference in gloss degree between the matte and glossy zones of the floor panel preferably is at least 10.

In a particularly preferred embodiment, the surface layer with a varying gloss degree features gloss degrees I and II which differ at least about 10 Gloss Units, preferably at least 20 Gloss Units, wherein said gloss units are measured according to for example DIN 67530, or DIN EN ISO 2813/2015 02 at an angle of 60°. Thereby, an optically clearly perceptible gloss is perceptible. The gloss degree may be varied and adjusted by providing the liquid onto said resin, preferably by means of a digital inkjet printing.

In a preferred embodiment, the liquid is substantially immiscible with said resin. In such case, the upper side of the surface layer visible to a spectator of the panel, substantially has at least two gloss degrees, with which it is meant that, by the naked eye, from a normal eye height said surface layer, when the panels are observed from a perceptible distance and at a suitable angle, only two clearly different gloss degrees can be distinguished. Hereby, a clear gloss difference among zones corresponding to the resin and the liquid can be observed.

In another preferred embodiment, the resin and the liquid may be partially miscible. Said partial miscibility may or may not lead to appearance of zones of intermediate gloss degree, in addition to zones of gloss degree I and II. This may be particularly advantageous wherein a complexity of the surface of the product requires more uniform outlook with no sharp difference between the zones corresponding to the resin and the liquid.

In a preferred embodiment, providing the liquid takes place by digital printing, which may be either in multipass/scanning mode or a single pass mode.

In the preferred embodiment, the printhead of the digital inkjet is chosen to match the certain resolution requirements and allow achieving the three dimensional surface layer with at least gloss degrees I and II, which gloss degrees I and II preferably correspond to the resin and the liquid. The obtained surface layer may show different gloss area disposed according to a pattern that is in register with an underlaying decorative pattern.

The resin of said second independent aspect may show one or more of the features described above in relation to the first independent aspect. In particular, composition, kind of resins, additive, thermoinitiator content, photoinitiator content, water content, dry content can be the same indicated in the first aspect and therefore they are not repeated here below. In a particularly preferred embodiment of a method according to the second aspect of the invention, the resin provided on the underlying layer of the product is a water based resin.

Similarly, the resin may be thermocurable as in the first independent aspect. And said step of curing the resin may occur without photocuring or in combination of thermal curing and photocuring as described with reference to the first aspect.

In preferred, the resin of the invention may be entirely photocurable resin, for example a UV curable resin or, preferably, an excimer curable resin. Excimer curing only works when the resin is a system without water content, i.e. a substantially water-free system. In said preferred embodiment, where the resin is excimer curable, the resin further comprises suitable monomers and polymers for assisting the excimer-curing, for example an agent which induces said excimer curing. In a further preferred embodiment, the excimer-curable resin may be silica free. The excimer curable resin is particularly suitable for products when a very matt surface is required. The use of the excimer curable resin in the method according to the second aspect of the invention, yields a surface layers of a gloss level from about 3 to about 20 gloss units. Moreover, the excimer curable resin is favorable in products when a very high scratch- and abrasion-resistant surface layer is required such as floor and furniture panels.

Excimer curable resin are particularly preferred in a method for producing a product which comprises a thermoplastic substrate material. The excimer-curable resin of the invention may be cured using excimer lamps in combination with LED bulbs, which are cold light sources, and thus will not affect the underlaying surface and/or the substrate material of the product obtainable by the method of the invention.

The liquid used in the method according to the second aspect of the invention is preferably a photocurable liquid, more preferably a UV curable liquid. In particular it is preferred that the liquid is at least partially curable through a different mechanism compared to the resin so that they can be at least in part cured independently. By employing the liquid which can be cured independently of the resin of the decorative surface layer, the better controllability of the process is achieved.

The liquid of said second independent aspect may show one or more of the features described above in relation to the first independent aspect. In particular, composition, additives, photoinitiator content, can be the same indicated in the first aspect and therefore they are not repeated here below.

In a preferred embodiment, the liquid is substantially non sensitive for excimer conditions, i.e. the liquid does not react under excimer conditions. The substantially non excimer reactive liquid is particularly favorable when an excimer curable resin is used in the method of the invention. In said preferred embodiment, the liquid may further comprise a pigment, such as carbon black, or the like, which additionally prevents excimer-curing of said liquid.

In an alternative embodiment, said the liquid used in the method according to the second aspect of the invention may be at least in part thermocurable. This may be advantageous in methods where the simultaneous thermal curing of the resin and the liquid is desired.

In a preferred embodiment, in the method according to the second aspect of the invention, said liquid and said resin show a chemical affinity to each other. The chemical affinity of the liquid and the resin is crucial for a good and efficient interaction and creating the desired surface layer with a varying gloss degree. A good affinity between the resin and liquid is further desired in order to create a strong interphase between them so that the final surface layer of the product may show an increased resistance to scratch and abrasion.

In a preferred embodiment, the resin and the liquid used in the method according to the second aspect of the invention comprise polymer material. In a further preferred embodiment, said resin and said liquid comprise substantially same polymer material.

In another preferred embodiment, the resin and the liquid comprise monomers which may interact in polymer formation. This may be particularly advantageous when a product of better mechanical properties is desired.

For sake of example some preferred combinations of liquid and resin are listed.

In a first preferred exemplary combination, said liquid and said resin comprise acrylic polymer material and at least a thermoinitiator. In a further preferred embodiment said thermoinitiator comprises an organic peroxide, azo-polymerization initiators, cesium ions or any mixture thereof. The specific thermoinitiators used in the method according to the first aspect may be used in the method according to the second aspect of the invention without departing from the scope of the invention. This particularly preferred embodiment may allow for a quick and well controllable thermal curing of the liquid and the resin, which yields a surface layer of an improved mechanical properties.

In a second preferred exemplary combination, said liquid and said resin comprise unsaturated polyester resin material. In a further preferred embodiment, said unsaturated polyester resin material further comprises at least a thermoinitiator, such as, for example, organic peroxide, azo-polymerization initiators, cesium ions or any mixture thereof.

In a third preferred exemplary combination, said liquid and said resin comprise polyurethane polymer material. The polyurethane polymer material is preferably water-based and comprises an acrylate functionality, and/or the dispersion comprises a UV acrylate, for example an epoxy modified polyurethane acrylate, such as for example the commercially available NeoRad UV20 40W. By means of the present preferred embodiment, improved adhesion can be obtained with both polyurethane resin and acrylate resin.

It should be understood by the skilled person that the specific components of the resin and/or the liquid used in the method according to the second aspect of the invention may be the same as the disclosed components of the resin and/or liquid used in the first aspect of the invention. The compositions of the resin and/or liquid disclosed in the method according to the first aspect of the invention may be applied in the method of the second aspect of the invention, without departing from the scope of the invention.

It is noted that in the preferred embodiment, the method of the second aspect, differently form the method of the first aspect, may end without the step of removing the liquid and/or mixture of the liquid and of the resin, so that obtained surface layer is substantially homogeneous and the tridimensional appearance is only imitated by the different gloss degrees. Anyway, according to a special embodiment, it is possible that the method of the second aspect comprises a step f removing the liquid and/or a mixture f the resin and of the liquid as described in accordance to the first independent aspect, so that the surface can comprise a combination of tridimensional feature and different gloss degrees.

It is important to note that the method according to the second aspect of the invention may comprise the step of providing said product with a decorative layer similarly to the method of the first aspect. It is noted that in a preferred embodiment of the invention the photocurable liquid can be applied according to a pattern that is in register with said decorative pattern so that the final pattern of gloss degrees is in register with the decorative pattern.

In a particularly preferred embodiment of the method according to the first aspect of the invention, said method further may further pressing of the surface layer to the underlaying material or a substrate material in a press treatment step, preferably a hot press treatment step. Said pressing step is preferably performed in a HPL and/or DPL and/or CPL or multidaylight press.

In a further preferred embodiment, the press step comprises an additional embossing of the surface layer, in particular an "analog" mechanical embossing. Such additional embossing of the surface layer may be performed by a pressplate, a press belt, a release paper, release foil , textured cylinder and the like.

Said press treatment step may be particularly favorable when a product featuring a surface layer with patterns corresponding to different gloss degrees is desired. For example, a press treatment step may lead to the appearance, wherein the resin is of a gloss degree I, the liquid is of a gloss degree II, and a surface created by the mechanical embossments in said resin and/or the liquid is of a gloss degree III. Said gloss degree may be optimized, for example by using of matting agents, excimer-curing and the like.

The products obtainable in the methods according to the first and/or the second aspects of the invention can preferably comprise panels for floor, wall, ceiling or furniture. Therefore, said method of the first and/or the second aspect can be part of methods for manufacturing panels.

Thereto, according to a third independent aspect, said invention concerns a method for producing a panel comprising one or more of the steps and of the features of the method of the first independent aspect. In particular according to a third independent aspect, said invention concerns a method for producing a panel comprising three dimensional surface layer, wherein said method comprises:-providing a substrate material, preferably the substrate material comprising a HDF, MDF, SPC , wood, ceramic, cellulose-based and/or mineral or cement based material;
- providing a three dimensional surface layer, wherein said providing of the surface layer comprises:
   - applying of a resin, preferably water based, on said substrate material; wherein said resin is at least in part thermocurable;
   - providing a photocurable, preferably a UV-curable, liquid onto at least one portion of said resin, when said resin is liquid or partially cured;
   - curing the resin at least by heating;
   - optional photo- and/or UV curing of said photocurable, preferably said UV-curable liquid;
   - optional removing of said photocurable, preferably said UV-curable liquid.

In a particularly preferred embodiment, the steps are performed in the order indicated above.

In yet another preferred embodiment, the method according to the third aspect of the invention comprises the method steps in the following order:
- providing a substrate material, preferably the substrate material comprising a HDF, MDF, SPC , wood, ceramic, cellulose-based and/or mineral or cement based material;
- providing a three dimensional surface layer, wherein said providing of the surface layer comprises:
   - applying of a resin, preferably waterbased, on said substrate material; wherein said resin is at least in part thermocurable;
   - at least partial curing the resin at least by heating;
   - providing a photocurable, preferably a UV-curable liquid onto at least one portion of said resin, when said resin is partially cured;
   - optional photo- and/or UV curing of said photocurable liquid;
   - curing of resin, preferably a full curing of based resin;
   - optional removing of said photocurable liquid.

In a particularly preferred embodiment, the method according to the third aspect of the invention includes an additional step of pressing the substrate material and the three dimensional surface layer by means of a press device. Said press device may be a roll press, double belt press, open- and close- press and the like. Said additional pressing step allows for at least partial thermal curing of the resin and/or the liquid in the surface layer, and improves the mechanical properties of such surface layer. Additionally, the pressing step may consolidate the whole panel obtained by the method according to the third aspect of the invention. In fact, in this pressing step the decorative layer and the surface layer can be fixed to the substrate material

In a further preferred embodiment said pressing step is performed after the optional photocuring of the photocurable liquid, and before optional removal of the said photocurable liquid.

In another preferred embodiment said pressing step is performed after the removal of the said photocurable liquid, more particularly as the end step of the method according to the third aspect of the invention.

The method according to the third aspect of the invention may comprise the step of providing said panel with a decorative layer substantially in the same way as described in accordance with the first independent aspect.

The panel obtainable by the method of the third aspect of the invention is particularly suitable for obtaining a deep and more natural surface appearance, which may or may not be "in register" with the decorative layer of the panel. The method for producing a panel according to the third aspect of the invention is at least advantageous for the reasons mentioned for the three dimensional surface layer obtainable by the method according to the first aspect of the invention.

According to a fourth independent aspect said invention concerns a method for producing a panel comprising one or more of the steps and of the features of the method of the second independent aspect. In particular according to said fourth independent aspect, said invention concerns a method for producing a panel comprising a surface layer with a varying gloss degree and a substrate material, said method at least comprising the following steps:
- providing a substrate material, preferably the substrate material comprising a HDF, MDF, SPC, wood, ceramic, cellulose-based and/or mineral or cement based material;
- applying of a resin on said substrate material; wherein said resin is at least in part thermocurable;
- providing a liquid onto at least one portion of said resin, when said resin is liquid or partially cured;
- curing of the resin at least by heating;
- curing of said liquid;
- said step of curing of the resin, said resin becomes of a gloss degree I, and in that by said step of curing of said liquid, said liquid or a mixture of said liquid with the resin becomes of a gloss degree II, whereby said gloss degree II is substantially different than gloss degree I.

In a particularly preferred embodiment, the steps of the method are performed in the above mentioned order.

In yet another preferred embodiment, the steps of the method are performed in the following order:
- providing a substrate material, preferably the substrate material comprising a HDF, MDF, SPC, wood, ceramic, cellulose-based and/or mineral or cement based material;
- applying of a resin on said substrate material; wherein said resin is at least in part thermocurable;
- at least partial curing of the resin at least by heating;
- providing a liquid onto at least one portion of said resin, when said resin is partially cured;
- providing a liquid onto at least one portion of said resin, when said resin is liquid or partially cured;
- curing of said liquid;- curing of the resin, preferably a full curing of the resin;
said step of curing of the resin, said resin becomes of a gloss degree I, and in that by said step of curing of said liquid, said liquid or a mixture of said liquid with the resin becomes of a gloss degree II, whereby said gloss degree II is substantially different than gloss degree I.

Said gloss degree may be preferably determined by the user, i.e. are visible to the naked eye, as explained for the determining of the difference of the gloss degree in a surface layer manufactured by the method according to the second aspect of the present invention. More particularly, it is preferred that, the aforementioned zones corresponding to the resin and the liquid are cured in such a way to allow that certain zones clearly manifest themselves as matte zones, whereas other zones manifest themselves as non-matte or glossy zones.

In a particularly preferred embodimentsaid panel comprises a surface layer with a varying gloss degree and a substrate material, wherein said gloss degrees I and II differ at least about 10 Gloss Units.

In a particularly preferred embodiment, the surface layer with a varying gloss degree features gloss degrees I and II which differ at least about 10 Gloss Units, preferably at least 20 Gloss Units, wherein said gloss units are measured according to DIN 67530, or DIN EN ISO 2813/2015 02 at an angle of 60°.

The method according to the fourth aspect of the invention may comprise the step of providing said panel with a decorative layer substantially in the same way as described in accordance with the first and second independent aspect.

In a particularly preferred embodiment, the method according to the fourth aspect of the invention includes an additional step of pressing the substrate material and the surface layer with a varying gloss degree by means of a press device. Said press device may be a roll press, double belt press, open- and close- press and the like. Said additional pressing step allows for at least partial thermal curing of the resin and/or the liquid in the surface layer, and improves the mechanical properties of such surface layer as well as the whole panel, which is better consolidated.

In a further preferred embodiment said pressing step is performed after at least partial curing of the resin and/or the liquid of the surface layer. More particularly, it is preferred that the pressing step is the final step of the method according to the fourth aspect of the invention, which would allow the full curing of the resin and/or the liquid in the surface layer and forming of the zones of gloss degree I and II, which correspond to the resin and liquid.

In a preferred embodiment, in the methods according to any of the first, second, third or fourth aspect of the invention, said providing the liquid, preferably at least photocurable liquid, more preferably at least the UV-curable liquid takes place by digital printing. In a preferred embodiment either a multipass/scanning mode, where the image is generated with multiple passages of the printhead, while the material to be printed advances, or a single pass mode, where the material to be printed passes only once under the printheads which are installed along the maximum width of the material itself, may be used. In a particularly preferred embodiment, said liquid is applied by means of a single pass digital printing. Single pass printing may be particularly favorable when large batches of the material or large runs of the production are to be performed.

Preferably, the digital printing of liquid provides for the use of a printhead to create and lay the liquid droplets that will then form the image to be printed.

In the preferred embodiment, the printhead of the digital inkjet is chosen to match the certain resolution requirements and allow achieving the three dimensional and/or surface layer comprising zones of varying gloss degree. In particular said resolution ca be the same used for printing the decorative pattern in the decorative layer. for example said resolution for printing the liquid can be of at least 200 dpi. The digitally print liquid may feature a relief, which may or may not be in register with the underlaying decorative layer of a panel. In a particularly preferred embodiment, the three dimensional surface and/or surface with a varying gloss degree zones produced in the methods according to any of the first, second, third or fourth aspect of the invention may be in register with the decorative layer of the panel.

In the preferred embodiments of the method according to any or the first, second, third or fourth aspect of the invention, the inkjet printhead used provides the droplets of the liquid, preferably photocurable liquid, more preferably the UV-curable liquid which may have different volumes and consequently different diameters. By way of example, the volumes of drops may be 1.5 pl, 2.4 pl, 3 pl, 6 pl, 10 pl, 12 pl, 30 pl, 80 pl with eth corresponding diameters 3 µm, 5 µm, 6 µm, 13 µm, 21 µm, 25 µm, 64 µm and 170 µm, respectively. In addition to a native size of a drop, which is an intrinsic feature of the printhead, larger drops may be generated by the printhead itself.

In the preferred embodiments of the method according to any or the first, second, third or fourth aspect of the invention, the underlying layer or the substrate material of the product comprises wood and/or cellulose based material, in particular MDF/HDF. However, it is not excluded to make use of a composed material, whereby a layer of MDF/HDF is present directly beneath the surface layer, whereas below this, still other layers are applied, whether or not of other materials. In another preferred embodiment of the method according to any or the first, second, third or fourth aspect of the invention the underlaying or substrate material of the panel comprises other wood derivates, such as a particleboard or a plywood. Also, it is not excluded to modify the MDF/HDF substrate material, such as, for example, by removing possible hard surface layers. It is noted that, when removing such hard surface layer, this is preferably performed at the lower side as well as the upper side of the substrate material order to avoid warping of the panel. By said hard surface layers, zones in the MDF/HDF itself are meant, which are situated in the proximity of the panel' s surface and which have a higher density than the panel's substrate material core.

By using of the MDF/HDF, modifications thereof or a wood derivative boards, a high-affinity interaction, more particularly a penetration of the resin into the underlaying layer of the substrate material is achieved. This high affinity interaction of the resin in the surface layer and the underlying layer of the substrate material allows a good consolidation of the product and improved mechanical properties.

In another preferred embodiment of the method according to any or the first, second, third or fourth aspect of the invention, the underlying layer and/or the substrate material of the product comprises a mineral material, more particulairy magnesium based material such as MgO (magnesium oxide), gypsum based material, cementfibre material and the like.

The wood and/or cellulose based material and/or mineral material may be particularly preferred in embodiments where the resin used in the method of the invention is cured by a heat source such as a thermal drying device or in a hot press treatment. Such substrate materials are thermo-resistant and may be particularly favorable in the methods steps which include a temperature or pressure treatment.

In another preferred embodiment of the method according to any or the first, second, third and/or fourth aspect of the invention the underlaying or substrate material of the panel comprises a synthetic material, preferably a thermoplastic material. In the alternative embodiment of the method of any of the first, second, third or fourth aspect of the invention, the synthetic substrate material comprises at least polymeric material. Preferably, said polymeric material is chosen from the list consisting of polyvinyl chloride (PVC), polyethylene (PE), polypropylene (PP), polyurethane (PU), and/or polyethylene terephthalate (PET) and/or polyester. In another embodiment, said polymeric material comprises at least a mixture of polymeric material chosen from the list consisting of PVC, PE, PP, PU, PET and/or polyester. In another embodiment, the method according to the first second and third aspect of the invention may be suitable for panels which comprise SPC (Solid or Stone Plastic Composite) as a synthetic substrate material, in particular, the panels which comprises a filled synthetic composite material comprising thermoplastic material and an inorganic filler material, that is free or essentially free from foamed areas. Some non-limiting examples of such substrate materials for panels are any filled synthetic composite comprising, preferably mainly comprising, said, preferably thermoplastic, polymeric material and a filler material. According to an exemplary embodiment, said polymeric material and a filler material comprise at least 50 wt.% of said substrate material, preferably at least 70 wt.% of said substrate material. In a particularly preferred embodiment, said substrate material essentially, i.e. at least for 95 wt.%, consists of said polymeric material and a filler material.

Various filler materials may be used in obtaining filled synthetic composite suitable to be used as a substrate material and/or underlying layer in the method according to any of the first, second, third or fourth aspect of the invention. Some of the non-limiting examples of said fillers are calcium carbonate (CaCO₃), sand, lime, kaolin, metakaolin, wollastonite, magnesium oxide, magnesium chloride, magnesium carbonate, glass, talc, carbon black, wood dust, bamboo dust, rubber, cork, straw, and paper. In a preferred embodiment, the filler material used in filled synthetic composite comprises at least calcium carbonate. Preferably, said filler is present in a content of at least 30 wt.%, preferably of at least 40 wt.%. In a particularly preferred embodiment, said synthetic substrate material comprises calcium carbonate as a filler, preferably in a weight ratio with said polymeric material of 1:1 or larger, preferably of 2:1 or larger, wherein a weight ratio of 3.5:1 or larger is not excluded.

In an alternative embodiment of the method according to any of the first, second, third and/or fourth aspect of the invention, said underlying layer or substrate material has a foam structure. The foam structure consists basically of a thermoplastic matrix in which closed and/or open cells are present, preferably said foam is a closed-cell foam, i.e. a foam where at least the majority of the cells are closed. The foam structure may be obtained by adding blowing agents to the thermoplastic melt, before it is formed and hardened into its final shape. As the foam structure has a lower density than a solid structure, the weight of the central layer is reduced which could be advantageous for manufacturing the coated panel of the invention.

The method of the invention according of any of the first, second, third and/or the fourth aspect may be particularly suitable for the substrate materials comprising thermoplastic or polymer material. The surface layer obtainable by the method of the invention may lead to an improved mechanical properties and less pronounced plastic look, which are known to be downsides of products comprising thermoplastic materials, as known from for example WO 2010/070474 or WO 2009/101217.

The substrate material comprising thermoplastic material may be free from reinforcement materials, such as glass fiber layers. It is not excluded however that said substrate material is reinforced, preferably by further comprising reinforcing materials. Various reinforcing materials may be present within the substrate material of the invention, such as glass fiber, either randomly distributed as separate fibers, or in the form of a net or fleece of glass fiber.

In an alternative embodiment, the method according to any of the first, second, third and/or fourth aspects of the invention comprises the step of providing a lacquer layer on top of the surface layer of the invention. The lacquer layer offers an additional protection of the surface layer of the panel and improved esthetics. Preferably, said lacquer layer is made of at least one transparent lacquer layer. More preferably, said lacquer layer is made of at least two layers of transparent lacquer. Preferably, said lacquer is a polyurethane based lacquer. In a further preferred embodiment, wear-resistant particles have been incorporated into said lacquer layer.

According to a preferred embodiment of the method according to any of the first, second, third and/or fourth aspect of the invention, the method of the invention is particularly suitable for manufacturing of floor, wall or furniture panels which panels feature the decorative surface layers. In a further preferred embodiment, wall or floor panels are manufactured at least by subdividing said substrate material and the attached thereto surface layers. In a further preferred embodiment, said floor or wall panels comprise mechanical coupling parts allowing two such panels to become connected to one another at respective edges, wherein a locking in a direction perpendicular to the plane of coupled panels is obtained as well as in a direction perpendicular to the coupled edges and in said plane. The method for manufacturing the panel can comprise the step of providing such panels with coupling elements configured for being coupled with coupling elements of adjacent panels thereby limiting or preventing drifting apart of said panels in a direction that is perpendicular to the plane of the panel and/or in a direction that lies on the plane of said panel. Preferably, herein this relates to coupling means of the type known as such from WO 97/47834, which is incorporated herein by a reference. Preferably, said coupling means substantially are made as a tongue-in-groove coupling, which is provided with locking means or locking parts, wherein said tongue-in-groove coupling realizes said vertical locking, whereas said locking means or parts are provided for realizing said locking in horizontal direction.

In another preferred embodiment, at least one pair of opposite side edges comprises mechanical coupling parts allowing to couple said panel at the respective side edges with a similar floor panel by means of a downward motion such that, in a coupled condition, said panel and said similar panel become locked both in a direction perpendicular to the plane formed by the coupled panels, as well as in a direction perpendicular to the coupled side edges and in the plane of the coupled panels. Such coupling means may include for example mechanical coupling parts are basically shaped as a male part and a female part, wherein the male part is formed with a downwardly extending hook shaped part and the female part comprises a lower flank with an excavation provided therein; wherein said male part is designed to be seated in said excavation. More examples of such coupling means is disclose for example in WO 2013/102803, WO 2006/043893, WO 01/75247, WO 03/016654 and WO 2010/087752, all incorporated herein by a reference.

It should be understood by a skilled person that other types of coupling mechanisms are possible without departing from the scope of the present invention.

As mentioned here above, it is noted that the products obtained through the methods of any one of the first, second, third and/or fourth aspect of the invention, which products comprise the substrate material and the surface layer, may be subjected by an additional dividing step. By this additional dividing step, preferably the panels are obtained, which panels have the size or approximately the size of the panels to be finally obtained. The dividing step may be performed by means of cutting, punching, sawing or the like. After division further finishing steps may be performed for example with the aim of forming said coupling means at the edges of the coated panels.

With the intention of better showing the characteristics according to the invention, in the following, as an example without limitative character, an embodiment is described, with reference to the accompanying drawings, wherein:
figure 1 shows schematically some steps in a preferred embodiment of a method according to the first aspect of the invention;
figures 2 and 3 in a view similar to figure 1 show some alternatives of the method according to the first aspect of the invention;
figure 4 shows schematically some steps in a preferred embodiment of a method according to the second aspect of the invention; and
figure 5 in a view similar to figure 4 show an alternative of the method according to the second aspect of the invention.

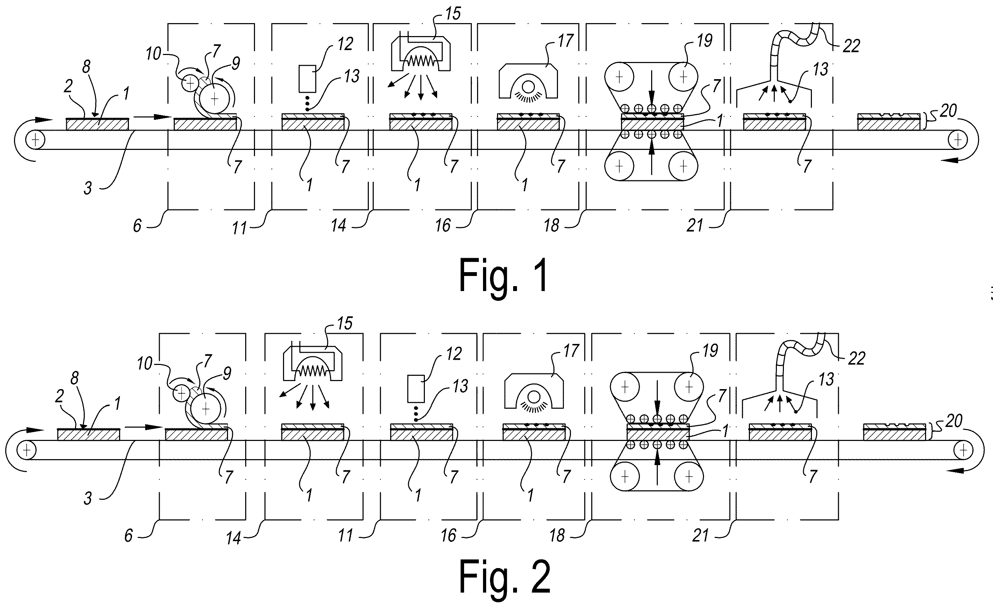

In the represented example, as depicted in figure 1, a substrate material 1, is placed on a transport unit 3, such as a conveyor belt, or the like. A decorative layer 2 is placed on the upper surface of the substrate material. The decorative layer 2 preferably comprises at least a paper comprising a print thereon. The paper layer is impregnated with a thermosetting melamine resin, said resin being partially cured. The transport unit 3 leads the substrate material 1 comprising a decorative layer 2 thereon to an application unit 6, wherein the resin 7 is to be applied onto an underlaying surface 8, said surface 8 being the outermost part of the decorative layer 2. The application unit is configured to apply the resin 7 in a liquid form uniformly onto the underlaying surface 8 by means of a rotating application roller 9 by which the resin 7 is applied onto the underlaying surface 8 as well as a counter pressure roller 10. In an alternative embodiment, alternatively or additionally, the application unit 6 can also comprise other elements configured for desired application of the resin 7 onto the underlaying surface 8 of the substrate material 1. Thereby, parameters of the resin 7, in particular, the amount of material or the thickness of the layer, or the water content or the temperature of the resin when being applied onto substrate material 1 can be influenced by the application unit 6. In the conveying direction, the next step takes place in a dispensing unit 11, in the example an inkjet printer, which is configured for dispensing the liquid 12, preferably in a form of droplets 13 into the partially cured resin 7. For dispensing the droplets 13, the dispensing unit 11 comprises one or several digital print head or print heads and/or, as the case may be, arranged one after another in the conveying direction, one or several digital nozzle beams with several digital print heads which can dispense or spray on the droplets 13 of the liquid 12 onto the resin 7, wherein the digital print heads extending across the width of the substrate layer 1. If desired, the dispensing unit 11 may be configured such that the droplets 13 penetrate into the partially cured resin 7 such that they displace the resin 7 and form recesses therein, the recesses being at least partially filled by the droplets 13. The dispensing unit 11 (or digital print station) can further be configured such that the droplets 13 penetrate into the partially cured resin 7 such that they are at least partially enclosed by said partially cured resin 7.

Parameters of the droplets 13, in particular, the volume of the droplets or the mass of the droplets or the dispensing or impingement speed onto resin 7 can be influenced by the dispensing unit 11. The volumes of the droplets can preferably be controlled within a range of 3 to 200 pL (Picoliter), the impingement speed is preferably in the region of 2 to 10 m/s, especially preferred in the region of 3 to 7 m/s.

In the conveying direction, a thermocuring unit 14 configured to at least partially cure the resin 7 follows on the dispensing unit 11. For curing the resin 7, the thermocuring unit 14 comprises a heat source 15. For example the thermocuring unit 14 can be in the form of a NIR or an hot air oven. The heat cures at least partially resin 7 and possibly at least partially the droplets 13 of the liquid 12.

In the conveying direction, the next step of curing takes place in a photocuring unit 16. The photocuring unit 16 comprises at least one UV light source 17, as, e.g., a LED UV radiator. Thereby, the at least one UV light source 17 radiates UV light onto the resin 7 and the droplets 13 of the liquid 12 and initiates possible curing or polymerization procedures therein. The resin 7 may or may not be additionally cured by the photoradiation emitted from the UV light source 17. Alternatively, or additionally, also a photocuring unit 16 may be provided by the additional light sources of different wavelengths. For an example, an infrared light source may be provided to assist the curing of the resin 7 and/or the droplets 13 of the liquid 12. In another embodiment, the light source may be an excimer light source, which may be provided to assist the curing of the resin 7 exclusively in the products of the invention which comprise an excimer-curable resin. Optionally, the flow source, for example, a blower, is configured to let flow air or another gas or medium for assisting the drying over resin 7 and/or the droplets 13 in order to allow evaporation the water from the resin 7 and/or droplets 13 of the liquid 12.

In an especially preferred embodiment, the parameters with which the thermocuring unit 14 and photocuring unit 16 is operated, such as, the energy or wavelength of the emitted UV radiation of the at least one UV light source 17, the emitted energy of the heat source 15, may be optimized to achieve the degree of cure of the resin 7 and/or droplets 13 of the liquid 12. For example, the wavelength of the UV radiation lies in the UV-A and, as the case make be, in the UV-B region, i.e., 280 nm to 400 nm or UV-C region. The power of the UV radiators for a production velocity of 20 m/min is at about 2× to 5×at least 80W/cm working width.

In the conveying direction, following step is performed in a pressing unit 18 comprising a pressing device 19 configured press together the substrate material 1, the decorative layer 2, the resin 7 and the droplets 13 of the liquid 12.

In the conveying direction, following step is performed in a removing unit 21 which may be a vacuum remover 22, or any other sort of the removers such a suction removers, brushes and the like. The step in the removing unit allows at least partial removing of the droplets 13 from the resin 7.

The resulting product 20 shows the three dimensional surface obtained by the method of the first aspect of the invention.

In order to achieve a certain three dimensional surface, any one of the steps conveyed in the units 6, 11, 14, 16, 18 and/or 21 may be repeated, or performed several times, without the departure from the scope of the present invention.

In an alternative embodiment, as shown in figure 2, a thermocuring unit 14 configured to at least partially cure the resin 7 follows on the application unit 6. In this practical embodiment, the at least partial curing of the resin 7 by means of the heat emitted from the heat source 15 happens before the dispensing the liquid 12, preferably in a form of droplets 13 is dispensed onto the partially cured resin 7.

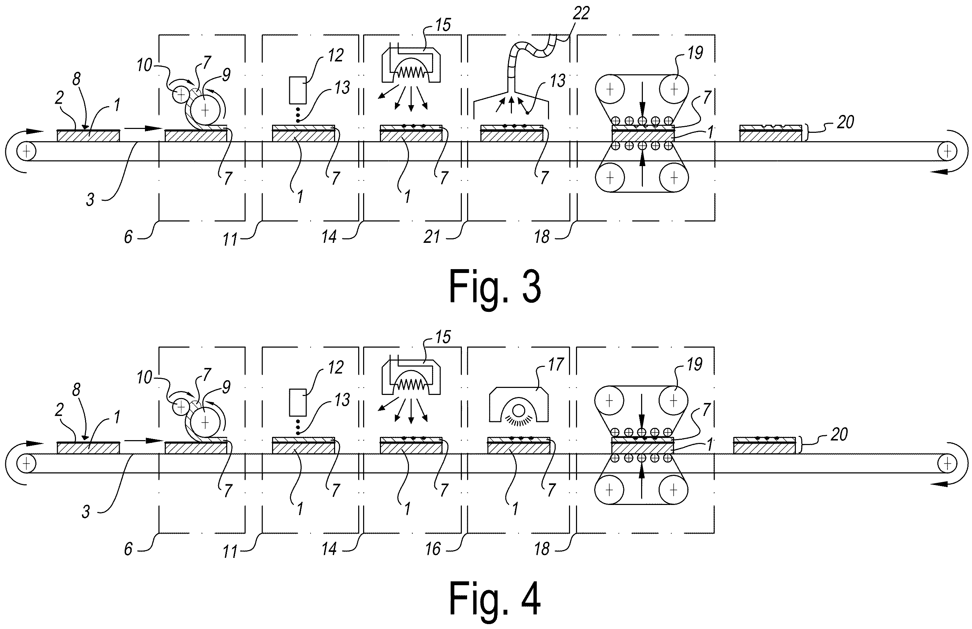

In an alternative embodiment shown in the figure 3, the photocuring step conducted in the photocuring unit 16 is omitted. In this practical embodiment, the curing of the resin 7 and the droplets 13 of the liquid 12 is done entirely by thermocuring, i.e. by means of the heat. Furthermore, in this particular embodiment, the removal of the liquid 12 in a removing unit 21 is done preferably before the pressing step 18 in the press device 19.

Similarly as in the embodiment shown by figure 1, in order to achieve a certain three dimensional surface, any one of the steps conveyed in the units 6, 11, 14, 16, 18 and/or 21 as shown in figure 2 or 3 may be repeated, or performed several times, without the departure from the scope of the present invention.

The method according to the second aspect of the invention, as represented by figure 4, includes conveying of substrate material 1, comprising the decorative layer 2 thereon is on transport unit 3. The decorative layer 2 preferably comprises at least a paper comprising a print thereon. The paper layer is impregnated with a thermosetting melamine resin, said resin being partially cured. The transport unit 3 leads the substrate material 1 comprising a decorative layer 2 thereon to the application unit 6, wherein the resin 7 is to be applied onto an underlaying surface 8, said surface 8 being the outermost part of the decorative layer 2. The application unit 6 is configured to apply the resin 7 in a liquid form uniformly onto the underlaying surface 8 by a rotating application roller system, similar to the system shown in figures 1-3. Thereby, parameters of the resin 7 can be influenced by the application unit 6, as described in figure 1. In the conveying direction, the next step takes place in a dispensing unit 11, which is configured for dispensing the liquid 12, preferably in a form of droplets 13 into the partially cured resin 7. For dispensing the droplets 13, the dispensing unit 11 comprises one or several digital print head or print heads and/or, as the case may be, arranged one after another in the conveying direction, one or several digital nozzle beams with several digital print heads which can dispense or spray on the droplets 13 of the liquid 12 onto the resin 7, the digital print heads extending across the width of the substrate layer 1. If desired, the dispensing unit 11 may be configured such that the droplets 13 at least partially penetrate into the partially cured resin 7 such that they displace the resin 7 and form recesses therein, the recesses being at least partially filled by the droplets 13. The dispensing unit 11 (or digital print station) can further be configured such that the droplets 13 penetrate into the partially cured resin 7 such that they are at least partially enclosed by said partially cured resin 7.

Parameters of the droplets 13 can be influenced by the dispensing unit 11 as described in figure 1.

In the conveying direction, a thermocuring unit 14 configured to at least partially cure the resin 7 follows on the dispensing unit 11. For curing the resin 7, the thermocuring unit 14 comprises a heat source 15. The heat cures at least partially resin 7 and possibly at least partially the droplets 13 of the liquid 12.

In the conveying direction, the next step of curing takes place in a photocuring unit 16, which photocuring unit preferably comprise the same elements as described in figure 1.

In an especially preferred embodiment, the parameters with which the thermocuring unit 14 and photocuring unit 16 is operated, such as, the energy or wavelength of the emitted UV radiation of the at least one UV light source 17, the emitted energy of the heat source 15, may be optimized to achieve the certain gloss degree I and gloss degree II of the resin 7 and the liquid 12, i.e. droplets 13 of the liquid 12, and to preferably aim the difference of at least 10 gloss degree units between the gloss degrees I and II.

In the conveying direction, following step is performed in a pressing unit 18 comprising a pressing device 19 configured to press together the substrate material 1, the decorative layer 2, the resin 7 and the droplets 13 of the liquid 12, thereby consolidating the product 20.

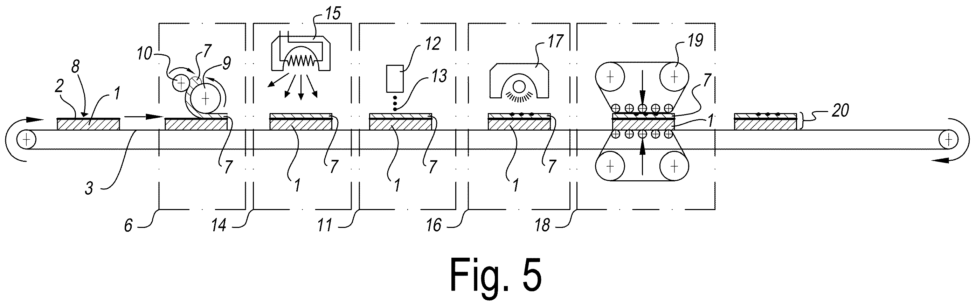

In an alternative embodiment of the method according to the second aspect of the invention shown in figure 5, a thermocuring unit 14 configured to at least partially cure the resin 7 follows on the application unit 10. In this practical embodiment, the at least partial curing of the resin 7 by means of the heat emitted from the heat source 15 happens before the dispensing the liquid 12, preferably in a form of droplets 13 is dispensed onto the partially cured resin 7.

In order to achieve a certain surface layer of a varying gloss degree, any one of the steps conveyed in the units 6, 11, 14, 16 and/or 18 as shown in figure 4 or 5 may be repeated, or performed several times, without the departure from the scope of the present invention.

With the aim of still further illustrating the features of the invention, here below, some examples and the results obtained are listed.

### Example 1.

A magnesium oxide mineral substrate material was provided with a decorative paper layer, impregnated with a thermosetting melamine resin, said paper layer comprising a paper, a printed image representing a marble motif, and a thermosetting resin. The decorative paper can be either adhered or not, for example with a glue, or with an intermediate layer of not fully cured melamine resin. The thermosetting resin is partially cured with hot-air during impregnation On top of said decorative layer, a further resin layer was applied. Said resin layer was provided in a quantity of about 80 to 120 g/m², said water-based resin being a melamine-formaldehyde resin with a solid content of about 50 wt.%. The resin comprised additionally silica as a matting agent and Al₂O₃ particles of an average size of about 100 µm. The resin layer was dried in a heat oven until a degree of cure of the resin was about 0.5.

It has been found that the resin may be applied in a quantity between 20 - 400 g/m² and the surface layer appearance was satisfying.

The liquid comprising a mixture of 95 wt.% of DPGDA (Dipropylene Glycol Diacrylate and 5 wt.% of TPO-L, was printed onto a resin layer using a digital inkjet, of a jetting temperature of between 30 and 50 °C.

The panel comprising said substrate material, a paper layer and a surface layer comprising the resin and the liquid was subjected to a heat press treatment at a temperature of about 160 - 200 °C, pressure between 5-80kg/cm2 until the degree of cure of the resin was about 0.9. The liquid appeared to be fully cured after this treatment, but in case the liquid is not fully cured, it may be subjected to an additional photocuring step using an UV-lamp.

The liquid was removed by an airknife and vacuum.

It should be noted that is case of other substrate materials such as MDF/HDF or cementfibre board or a filled thermoplastic, the temperature of the drying of the press treatment could be adjusted to be in range between 60 and 200 °C, which would allow satisfying thermal curing of the resin and optionally the liquid.

### Example 2.

A HDF substrate material was provided by a decorative paper layer, said paper layer comprising a paper, a printed image representing a wood motif, and a thermosetting resin. The thermosetting resin is partially cured using a hot air or (N)IR oven. Thereon a resin layer in a quantity of about 200 to about 250 g/m² was applied, said resin being a polyurethane resin with a solid content of about 60 wt.%. The resin comprised additionally silica, as a matting agent, and Al₂O₃ particles of an average size of about 100 µm. The resin layer was optionally dried in a heat oven until a degree of cure of the polyurethane resin was about 0.5. The substrate material, decorative layer and the resin consolidated in a panel.

It has been found that the resin may be applied in a quantity between 20 - 400 g/m2 and the surface layer appearance was satisfying.

The comprising a mixture of 95 wt.% of DPGDA (Dipropylene Glycol Diacrylate and 5 wt.% of TPO-L, was printed onto a resin layer using a digital inkjet, of a jetting temperature of between 30 and 50 °C.

The panel comprising said substrate material, a paper layer and a surface layer comprising the resin and the liquid was subjected to a short cycle press treatment, until the degree of cure of the polyurethane resin was about 0.9. The heated belt press was equipped by an analog relief, which relief was featuring recessions and protrusions enabled to transfer a macrostructure, which would allow obtaining an embossed structure corresponding to a wood pore motif, which corresponds to a printed decor on the paper of the decorative layer and features embossments deeper than 100 µm.

The liquid cured after the short cycle press treatment, but the panel was additionally subjected to a photocuring step.

After the short cycle press treatment and the photocuring, the resin appeared to be of a gloss degree I, the liquid appeared to be of a gloss degree II, and the mechanical embossment zones created by said heated belt press appeared to be of a gloss degree III.

In this particular example, the liquid was not removed from the obtained panel, and the panel featured zones of three gloss degrees. Should it be desired to have a panel of two gloss degrees, that is possible to be done by a mechanical removal process such as mechanical brushing and vacuum suction and the like.

### Example 3.

A filled PVC substrate material was directly printed with a wood motif print and provided with a (meth)acrylate based resin comprising monomers and polymers which are excimer sensitive and aluminum oxide particles of the average particle size of about 100 µm. The resin was applied in a quantity of about 300 g/m².

It has been found that the resin may be applied in a quantity between 20 - 400 g/m2 and the surface layer appearance was satisfying.

The liquid comprising a mixture of vinyl monomers comprising a photoinitiator TPO-L, and a pigment carbon black was printed onto a resin layer using a digital inkjet, of a jetting temperature of between 30 and 50 °C. The liquid composition was chosen not to xlink under excimer radiation.

The panel comprising said substrate material, and a surface layer comprising the resin and the liquid was subjected to an excimer curing under an excimer light source (172 nm), the resin was microfolding .

The microfolded resin and the uncured liquid were subjected to a photocuring step under the UV lamp. until the degree of cure of the resin was about 0.9.

After the photocuring, the resin appeared to be of a gloss degree I which was observed as an extreme matt, while the liquid appeared to be of a gloss degree II. The difference of the gloss degrees was perceivable by a naked eye and by DIN 67530, the difference of gloss degrees I and II was about 20 gloss units.

### Example 4.

The substrate material comprising MDF/HDF panel, was provided with the melamine impregnated decorative paper, said paper comprising a wood grain print. The melamine resin in the decorative paper was partially cured, with a degree of cure of about 0.4. A layer of water based melamine resin was applied onto the substrate material on the side of saiddecorative paper. The water based melamine layer comprised about 55 wt.% water, and was subjected to a partial curing using the heat source. Once that the resin was with a degree of cure of about 0.6, a liquid comprising acrylate resin with a benzoyl peroxide as a thermoinitiator was applied using digital printer jet. In the following step, the resin and/or the printed liquid were subjected to a thermal curing in a thermal curing unit. The curing was stopped at the point wherein the resin reached a degree of cure of 0.8. The semi cured product was subjected to a pressing step whereby the resin and the liquid were fully cured and the product was consolidated. The fully cured zones corresponding to the resin and the liquid featured the different gloss degrees perceivable by the naked eye, namely a gloss degree I and a gloss degree II, respectively. The difference of the gloss degrees was measured by DIN 67530, the difference of gloss degrees I and II was about 17 gloss units.

The invention is further disclosed by the following paragraph list as defined by the below numbered paragraphs.

Item list:
1.- Method for manufacturing a product comprising a three dimensional surface layer for a panel, said method at least comprising the following steps:
   - applying of a resin, preferably water based, on an underlying surface of the product; wherein said resin is at least in part thermocurable;
   - providing a UV-curable liquid onto at least one portion of said resin, when said resin is liquid or partially cured;
   - curing the resin at least by heating;
   - optional UV curing of said UV-curable liquid;
   - optional removing of said UV-curable liquid.
2.- Method according to paragraph 1, characterized in that said providing of the UV-curable liquid comprises at least partial penetrating of said UV-curable liquid in the resin.
3.- Method according to any one of the preceding paragraphs, characterized in that said resin comprises at least 30 wt.% of water with respect to weight of said resin.
4.- Method according to any one of the preceding paragraphs, characterized in that said resin comprises at least about 25 wt.%, preferably at least about 40 wt.%, and at most about 75 wt.%, preferably at most about 50 wt.% of solid matter with respect to weight of said resin.
5.- Method according to any one of the preceding paragraphs, characterized in that said resin comprises melamine-formaldehyde, ureaformaldehyde, acrylate and/or methacrylate, polyurethane, unsaturated polyester and/or epoxy resin.
6.- Method according to any one of the preceding paragraphs, characterized in that said curing of the resin at least by heating, i.e. thermal energy, is curing in absence of a photoradiation.
7.- Method according to any one of the preceding paragraphs, characterized in that said curing of the resin is done exclusively by heating.
8.- Method according to any one of the preceding paragraphs, characterized in that said resin in addition to being at least in part thermocurable is also at least in part photocurable .
9.- Method according to any one of the preceding paragraphs, characterized in that said resin further comprises additional additives, such as matting agents, for example silica and/or abrasion resistant particles, such as aluminum oxide.
10.-Method according to paragraph 9, characterized in that said abrasion resistant particles are preferably of an average size of about 10 to about 150 µm.
11.- Method according to any one of the preceding paragraphs, characterized in that said curing of the resin at least by heating comprises a first curing step by means of heating, wherein the resin is cured to a degree of cure of at least 0.5, and preferably a second curing step whether or not by means of heating wherein a total cure is obtained, or at least a degree of cure of more than 0.9.
12.- Method according to paragraph 11, characterized in that said a degree of cure of at least 0.7 is obtained by the first curing step by means of heating.
13.- Method according to any one of paragraphs 11 or 12, characterized in that said second curing step, when available, is performed by means of photoradiation, preferably UV radiation.
14.- Method according to any one of paragraphs 11 to 13, characterized in that said resin further comprises additional additives, for example thermocuring agents, photocuring agents, acid curing agents, isocyanates, excimer-curing assisting agents and the like.
15.- Method according to any one of the preceding paragraphs, wherein the step of curing of the resin at least in part takes place in a thermal drying device, such as oven. Or a (N) IR oven
16.- Method according to paragraph 14, characterized in that curing of said resin is performed at least in part by UV-curing.
17.- Method according to any one of the preceding paragraphs, characterized in that said liquid comprises a methacrylate and/or acrylate and/or vinyl monomers.
18.- Method according to paragraph 17 characterized in that said liquid further comprises a photoinitiator.
19.- Method according to paragraph 18, characterized in that said photoinitiator is a type 1 or 2 photoinitiator, preferably acylphosphine oxide, benzile ketale, benzoin derivate, alfa hydroxyalkylphenone, alfa amine acetophenone, phenylglyoxylate, for example TPO-L.
20.- Method according any of one of paragraphs 17 to 19, characterized in that said liquid further comprises additional agents, such as surface tension modifiers, slip agents, wetting agents, and the like.
21.- Method according to any one of the preceding paragraphs, characterized by an additional heat pressing step, preferably after the optional curing of the resin and/or liquid
22.- Method according to paragraph 21, characterized in that said heat-pressing steps is performed with a flat pressplate, press belt, multi daylight press or by using a release paper or film.
23.- Method according to any one of paragraphs 21 or 22, characterized in that said heat pressing step comprises and additional embossing of the surface layer, preferably a mechanical embossing of the surface layer.
24.- Method for manufacturing a product comprising a surface layer with a varying gloss degree, said method at least comprising the following steps:
   - applying of a resin on an underlying layer of the product; wherein said resin is at least in part thermocurable;
   - providing a liquid onto at least one portion of said resin, when said resin is liquid or partially cured;
   - optional curing of said liquid;
   - curing of the resin at least by heating;
   - curing of said liquid, preferably a full curing of said liquid;
   - characterized in that by said step of curing of the resin, said resin becomes of a gloss degree I, and in that by said step of curing of said liquid or a mixture of said liquid with the resin becomes of a gloss degree II, whereby said gloss degree II is substantially different than gloss degree I.
25.- Method for manufacturing a product comprising a surface layer with a varying gloss degree according to paragraph 24, characterized in that said gloss degrees I and II differ at least about 10 Gloss Units.
26.- Method according to any one of paragraphs 24 or 25, characterized in that said resin is a water based resin.
27.- Method according to any one of paragraphs 24 to 26, characterized in that said resin comprises melamine-formaldehyde, ureaformaldehyde, acrylic, polyurethane, unsaturated ester and/or epoxy resin.
28.- Method according to any one of paragraphs 24 to 27, characterized in that said resin is in addition to being at least in part thermocurable, also at least in part photocurable.
29.- Method according to any one of paragraphs 24 to 28, characterized in that said resin is a melamine-formaldehyde resin.
30.- Method according to any one of paragraphs 24 to 28, characterized in that said resin is a polyurethane resin.
31.- Method according to any one of paragraphs 24 to 28, characterized in that said resin is a (meth)acrylate resin.
32.- Method according to any one of paragraphs 24 to 31, characterized in that said resin further comprises additional additives, for example thermocuring agents, photocuring agents, acid curing agents, isocyanates, excimer-curing assisting agents and the like.
33.- Method according to any one of paragraphs 24 to 32, wherein the step of curing of the resin at least in part by thermal drying, for example in a thermal drying device, such as oven or a (N) IR oven
34.- Method according to any one of paragraphs 24 to 32, characterized in that curing of said resin is performed at least in part by UV-curing.
35.- Method according to any one of paragraphs 24 or 25, characterized in that said resin is a UV curable resin.
36.- Method according to any one of paragraph 35, characterized in that curing of said resin is performed at least in part by excimer-curing.
37.- Method according to any one of the paragraphs 24 to 36, characterized in that said liquid comprises methacrylate, acrylate and/or vinyl polymer material.
38.- Method according to any one of the paragraphs 24 to 37, characterized in that said liquid further comprises a type 1 or 2 photoinitiator, preferably acylphosphine oxide, benzile ketale, benzoin derivate, alfa hydroxyalkylphenone, alfa amine acetophenone, phenylglyoxylate, for example TPO-L.
39.- Method according to any one of the paragraphs 24 to 38, characterized in that said liquid is not excimer sensitive.
40.- Method according to any one of paragraphs 24 to 39, characterized in that said liquid is a UV curable liquid.
41.- Method according to any one of paragraphs 24 to 40, characterized in that said liquid is substantially immiscible with said resin.
42.- Method according to any one of paragraphs 24 to 40, characterized in that said liquid is partially miscible with said resin.
43.- Method according to any one of paragraphs 24 to 42, characterized in that said liquid and said resin show a chemical affinity to each other.
44.- Method according to any one of paragraphs 24 to 43, characterized in that said liquid comprises acrylic monomer or polymer material.
45.- Method according to any one of paragraphs 24 to 44, characterized in that said liquid comprises polyurethane polymer material.
46.- Method according to any one of paragraphs 24 to 34 and 37 to 45, characterized in that said resin comprises at least 30 wt.% of water with respect to weight of said resin.
47.- Method according to any one of paragraphs 24 to 34 and 37 to 46, characterized in that said resin is with a solid content of at least about 25 wt.%, preferably at least about 40 wt.%, and at most about 75 wt.%, preferably at most about 50 wt.% of solid matter with respect to weight of said resin.
48.- Method according to any one of any one of paragraphs 25 to 47, characterized by an additional heat pressing step, preferably after the optional curing of the liquid.
49.- Method according to paragraph 48, characterized in that said heat-pressing steps is performed in a flat pressplate, press belt or by using a release paper or film.
50.- Method according to any one of paragraphs 48 or 49, characterized in that said heat pressing step comprises and additional embossing of the surface layer, preferably a mechanical embossing of the surface layer.
51.- Method for producing a panel comprising a three dimensional surface layer, wherein said method comprises:
   - providing a substrate material, preferably the substrate material comprising a HDF, MDF, SPC , wood, ceramic, cellulose-based and/or mineral or cement based material;
   - providing a three dimensional surface layer, wherein said providing of the surface layer comprises:
      - applying of a resin, preferably waterbased, on said substrate material; wherein said resin is at least in part thermocurable;
      - providing a photocurable, preferably a UV-curable liquid onto at least one portion of said resin, when said resin is liquid or partially cured;
         -;
      - curing the resin at least by heating;
      - optional photo- and/or UV curing of said photocurable, preferably said UV-curable liquid;
      - optional removing of said photocurable, preferably said UV-curable liquid.
52.- Method for manufacturing a panel, said panel comprising a surface layer with a varying gloss degree and a substrate material, said method at least comprising the following steps:
   - providing a substrate material, preferably the substrate material comprising a HDF, MDF, SPC, wood, ceramic, cellulose-based and/or mineral or cement based material;
   - applying of a resin on said substrate material; wherein said resin is at least in part thermocurable;
   - providing a liquid onto at least one portion of said resin, when said resin is liquid or partially cured;
   - curing of the resin at least by heating;
   - curing of said liquid;
   - characterized in that by said step of curing of the resin, said resin becomes of a gloss degree I, and in that by said step of curing of said liquid, said liquid or a mixture of said liquid with the resin becomes of a gloss degree II, whereby said gloss degree II is substantially different than gloss degree I.
53.- Method for manufacturing a panel, said panel comprising a surface layer with a varying gloss degree and a substrate material according to paragraph 52, characterized in that said gloss degrees I and II differ at least about 10 Gloss Units.
54.-Method according to any one of the numbered paragraphs 1, 25, 51 or 52, characterized in that said method further comprises pressing the substrate material and the surface layer by means of a press device.

The present invention is in no way limited to the above described embodiments, but such methods for manufacturing of surface layers and the panels comprising said surface layers may be realized according to several variants without departing from the scope of the invention.

## Claims

1. Method for manufacturing a product (20) comprising a three dimensional surface layer for a panel, said method at least comprising the following steps:
- applying of a water based resin (7) on an underlying surface (8) of the product (20); wherein said water based resin (7) is at least in part thermocurable;
- providing a UV-curable liquid (12,13) onto at least one portion of said water based resin (7), when said water based resin (7) is liquid or partially cured;
- optional UV curing of said UV-curable liquid (12);
- curing the water based resin (7) at least by heating;
- optional removing of said UV-curable liquid (12).

2. Method according to claim 1, **characterized in that** said providing of the UV-curable liquid comprises at least partial penetrating of said UV-curable liquid in the resin.

3. Method according to any one of the preceding claims, **characterized in that** said resin (7) comprises at least 30 wt.% of water with respect to weight of said resin.

4. Method according to any one of the preceding claims, **characterized in that** said resin (7) comprises at least about 25 wt.%, preferably at least about 40 wt.%, and at most about 75 wt.%, preferably at most about 50 wt.% of solid matter with respect to weight of said resin.

5. Method according to any one of the preceding claims, **characterized in that** said resin (7) comprises melamine-formaldehyde, ureaformaldehyde, acrylate and/or methacrylate, polyurethane, unsaturated polyester and/or epoxy resin.

6. Method according to any one of the preceding claims, **characterized in that** said resin (7) in addition to being at least in part thermocurable is also at least in part photocurable

7. Method according to any one of the preceding paragraphs, **characterized in that** said curing of the resin (7) at least by heating comprises a first curing step by means of heating, wherein the resin(7) is cured to a degree of cure of at least 0.5, and preferably a second curing step whether or not by means of heating wherein a total cure is obtained, or at least a degree of cure of more than 0.9.

8. Method according to claim 7, **characterized in that** said a degree of cure of at least 0.7 is obtained by the first curing step by means of heating.

9. Method according to any one of claims 6 or 7, **characterized in that** said second curing step, when available, is performed by means of photoradiation, preferably UV radiation.

10. Method according to any one of claims 6 to 9, **characterized in that** said resin (7) further comprises additional additives, for example thermocuring agents, photocuring agents, acid curing agents, isocyanates, excimer-curing assisting agents and the like.

11. Method according to any one of the preceding claims, wherein the step of curing of the resin (7) at least in part takes place in a thermal drying device, such as oven or a (N)IR oven.

12. Method according to any of the preceding claims, **characterized in that** said liquid comprises a methacrylate and/or acrylate and/or vinyl monomers, preferably wherein said liquid further comprises a photoinitiator.

13. Method according to any one of the preceding claims, **characterized by** an additional heat pressing step, preferably after the optional curing of the resin and/or liquid

14. Method according to claim 13, **characterized in that** said heat-pressing steps is performed with a flat pressplate, press belt, multi daylight press or by using a release paper or film.

15. Method according to claim 13 or 14, **characterized in that** said heat pressing step comprises and additional embossing of the surface layer, preferably a mechanical embossing of the surface layer.
